# EUROPÄISCHE PATENTSCHRIFT

(11) **EP 2 378 167 B1**
(45) Veröffentlichungstag und Bekanntmachung des Hinweises auf die Patenterteilung: **16.01.2019**
(21) Anmeldenummer: 11002873.5
(22) Anmeldetag: 06.04.2011
(51) Int. Cl.: F16H 63/48, F15B 15/26

(54) **Verriegelungseinheit**
Sealing unit
Unité de verrouillage

(30) Priorität: 16.04.2010 DE 102010015514
(43) Veröffentlichungstag der Anmeldung: 19.10.2011
(73) Patentinhaber: Firma SVM Schultz Verwaltungs-GmbH & Co. KG, 87700 Memmingen (DE)
(72) Erfinder: Scherer, Georg, D-87757 Kirchheim (DE); Mang, Helmut, D-87700 Memmingen (DE)
(74) Vertreter: Pfister, Stefan Helmut Ulrich

(56) Entgegenhaltungen:
- EP-A1- 1 795 410
- DE-A1-102007 000 637
- DE-B3-102008 026 124

## Beschreibung

Die Erfindung betrifft eine Verriegelungseinheit, insbesondere eine Getriebeverriegelungseinheit, welche aus einer Spule besteht, welche zumindest teilweise einen Ankerraum umgibt, wobei die Spule einen von elektrischem Strom durchfließbaren Draht aufweist. Des Weiteren besitzt die Verriegelungseinheit eine aus dem Ankerraum herausstehende, einen Anker tragende, gegenüber der Spule bewegliche Ankerstange und eine mit der Ankerstange zusammenwirkende Betätigungselementverriegelung, die in Abhängigkeit der Steuerung der Ankerstange in einer ersten oder zweiten Stellung ein Betätigungselement festhält oder freigibt. Vorbeschriebene verriegelungseinheit, insbesondere Getriebeverriegelungseinheiten, werden bei mit Automatikgetrieben oder Halbautomatikgetrieben ausgestatteten Fahrzeugen eingesetzt. Die Verriegelungseinheiten haben dabei die Aufgabe, die Parksperre im Betrieb offen zu halten. Die Anordnung ist dabei so gewählt, dass beim betriebsbereiten Fahrzeug durch das fahrzeuginterne Getriebesteuerungssystem ein hydraulischer Druck erzeugt wird, der auf einem Betätigungselement, zum Beispiel einem Kolben, wirkt. Der Kolben drückt dann durch seine Bewegung auf einen Anker der Verriegelungseinheit und setzt diesen gegen die Polfläche des Magneten. Die bekannten Verriegelungseinheiten besitzen eine Spule, die einen von elektrischem Strom durchfließbaren Draht aufweist. Die Spule wird dauerhaft bestromt und das hieraus resultierende Magnetfeld entwickelt eine entsprechende magnetische Haltekraft, die den Anker mit ausreichend hoher Kraft anzieht und so eine erste Stellung der Ankerstange definiert. Die Ankerstange wirkt dabei zusammen mit einer Betätigungselementverriegelung, die in dieser Stellung das Bedienungselement zuverlässig festhält. Durch eine solche Anordnung ist sichergestellt, dass auch bei einem Absinken oder bei einem Wegfall der hydraulischen Kraft, die auf den Kolben wirkt, diese nicht in seine Grundlage zurückfällt und das Fahrzeug blockiert. Durch die bekannte Verriegelungseinheit wird die Parksperre in dem geöffneten Zustand verriegelt. Erst durch das Abschalten des Spulenstroms reduziert sich die magnetische Haltekraft so stark, dass sich die Verriegelung gegen die Kraft einer Rückstellfeder öffnet und den Kolben freigibt.

Der Betrieb der bekannten Verriegelungseinheit bedingt einen dauerhaften Stromfluss durch die Wicklung der Spule. Es wird Energie benötigt.
In DE 10 2007 000 637 A1 wird eine Vorrichtung zum Betätigen einer Rastvorrichtung beschrieben. Bei dieser Vorrichtung kommt ein Permanentmagnet zum Einsatz, die die Rastvorrichtung im stromlosen Zustand in der gewünschten Stellung hält. Die offenbarte Vorrichtung ist aus einer Vielzahl an Einzelteilen aufgebaut, was Zeitbedarf und Fehleranfälligkeit beim Zusammenbau erhöht.

Es ist Aufgabe der vorliegenden Erfindung, eine Verriegelungseinheit vorzuschlagen, die energieeffizient und einfach zu montieren ist.

Zur Lösung dieser Aufgabe geht die Erfindung aus von einer Verriegelungseinheit, wie eingangs beschrieben und schlägt vor, dass die Ankerstange beziehungsweise der Anker in einer ersten Stellung von einem Permanentmagneten, insbesondere stromlos, gehalten ist und ein Stromfluss durch den Draht der Spule die Haltekraft des Permanentmagneten kompensiert und die Ankerstange in die zweite Stellung gelangt.

Der erfindungsgemäß vorgeschlagene Permanentmagnet ist dabei in dem magnetischen Kreis der Verriegelungseinheit so integriert, dass dieser die Ankerstange beziehungsweise den Anker zuverlässig in einer ersten Stellung hält und aufgrund dieser ersten Stellung die Betätigungselementverriegelung einen definierten Zustand bezüglich des Festhaltens oder Freigebens des Bedienelementes einnimmt. Ein wesentlicher Vorzug dieser Erfindung liegt dabei darin, dass diese Stellung stromlos, also ohne Einsatz von Energie gehalten werden kann.

Um die Betätigungselementverriegelung in einen anderen Zustand zu versetzen wird erfindungsgemäß ein Stromfluss durch den Draht der Spule bewirkt, wobei hierzu ein kurzer Stromimpuls (wenige 100 ms bis einige Sekunden) je nach Auslegung ausreicht, um die Haltekraft des Permanentmagneten zu kompensieren und so zu gestatten, dass die Ankerstange in die zweite Stellung gelangt, wodurch dann auch die Bedienungselementverriegelung in einen anderen Zustand gelangt. Üblicherweise wird dabei das von dem Elektromagneten, welcher die Spule umfasst, erzeugte Magnetfeld dem Magnetfeld des Permanentmagneten entgegen gerichtet und gleich groß oder größer sein, um die Kompensation wie gewünscht zu erreichen.

Geschickterweise wird dabei der für das Abwerfen des Permanentmagneten notwendige Stromfluss in einer kleinen elektrischen beziehungsweise elektronischen Schaltung, zum Beispiel einen entsprechenden Kondensator, vorgehalten, wobei der Kondensator sich dann entlädt, wenn zum Beispiel der Zündstrom abgeschaltet wird oder ein anderes, eindeutiges Ereignis am Fahrzeug stattfindet. So ist ebenfalls eine betriebssichere Funktionsweise der Verriegelungseinheit darstellbar.
Erfindungsgemäß ist weiter vorgesehen, dass die Spule einen Spulenkörper aufweist und der Spulenkörper den Permanentmagneten aufnimmt oder trägt wobei der Permanentmagnet als ringartige Anordnung von einzelnen Segmentmagneten ausgebildet ist, die an einem ringartigen Fortsatz an dem haspelartigen Spulenkörper ringförmig angeordnet oder angeformt sind.
Die Aufgabe der Erfindung wird ebenfalls gelöst durch eine Verriegelungseinheit insbesondere Getriebeverriegelungseinheit, bestehend aus einer Spule, welche zumindest teilweise einen Ankerraum umgibt, wobei die Spule einen von elektrischem Strom durchfließbaren Draht aufweist, sowie eine aus dem Ankerraum herausstehende, einen Anker tragenden, gegenüber der Spule beweglichen Ankerstange sowie bestehend aus einer mit der Ankerstange zusammenwirkenden Betätigungselementverriegelung, die in Abhängigkeit der Stellung der Ankerstange in einer ersten oder zweiten Stellung ein Betätigungselement festhält oder freigibt und die Ankerstange beziehungsweise der Anker in einer ersten Stellung von einem Permanentmagneten insbesondere stromlos gehalten ist und ein Stromfluss durch den Draht der Spule die Haltekraft des Permanentmagneten kompensiert und die Ankerstange in die zweite Stellung gelangt, wobei die Spule einen Spulenkörper aufweist, dadurch gekennzeichnet, dass eine von dem Spulenkörper der Spule getrennte, ringartige Halterung für den Permanentmagneten beziehungsweise für die Anordnung von einzelnen Segmentmagneten des Permanentmagneten vorgesehen ist und der Permanentmagnet in der Verriegelungseinheit im Wesentlichen ortsfest ist.

In einer bevorzugten Ausgestaltung der Erfindung ist vorgesehen, dass das Bedienungselement derart auf die Ankerstange wirkt, dass die Ankerstange, insbesondere gegen die Kraft einer Rückstellfeder in die erste Stellung gelangt. Bei betriebsbereitem Fahrzeug oder System drückt das Bedienungselement (zum Beispiel ein Kolben, der Teil der fahrzeuginternen Getriebehydraulik ist) auf die Ankerstange derart, dass diese gegen die Kraft einer Rückstellfeder in die erste Stellung gelangt und in dieser das Bedienungselement durch die Bedienungselementverriegelung mechanisch gehalten ist. Es ist natürlich auch möglich, dass die Ankerstange beziehungsweise der Anker durch ein anderes Mittel in die erste Stellung gelangt, zum Beispiel mit einer externen oder internen zusätzlichen Erregerspule. Die Anordnung ist dabei so gewählt, dass in der ersten Stellung ein in der zweiten Stellung geöffneter Luftspalt zwischen dem Anker und einer Polfläche geschlossen ist. Die Haltekraft des Permanentmagneten wirkt dabei über diesen geschlossenen Luftspalt. Geschickterweise ist daher vorgesehen, dass der Permanentmagnet im gleichen magnetischen Kreis angeordnet ist, wie die Spule, wobei die Spule als Teil eines Elektromagneten sich den gleichen magnetischen Kreis zunutze macht. Dadurch ist es leicht möglich, die Wirkung des von der Spule erzeugten (Elektro-)Magnetfeldes gegen die magnetische Haltekraft des Permanentmagneten einzusetzen, um so die Lage der Ankerstange und damit auch den Schaltzustand zu beeinflussen.

Der erfindungsgemäß vorgeschlagene Permanentmagnet ist dabei sehr variabel ausbildbar und realisierbar. Dabei umfasst der Begriff Permanentmagnet einen als Dauermagnet realisierten Magneten mit entsprechend hoher Eigenmagnetisierung und daraus resultierend hoher Haltekraft. Der Begriff Permanentmagnet umfasst dabei sowohl einstückig ausgebildete Magnete, wie auch die Anwendung von mehreren Magneten.

So ist in einer erfindungsgemäßen Variante vorgesehen, dass der Permanentmagnet als Ringmagnet ausgebildet ist. Alternativ hierzu ist vorgesehen, dass der Permanentmagnet als ringartige Anordnung von einzelnen Segmentmagneten realisiert ist. Der Permanentmagnet ist aber auch als Stabmagnet realisierbar, insbesondere dann, wenn der Permanentmagnet auf beziehungsweise in der Ankerstange und auf oder in dem Anker realisiert ist. Zwar ist hier das zur Verfügung stehende Bauvolumen geringer, wie wenn der Permanentmagnet den Ankerraum umgibt und die hieraus resultierenden Haltekräfte unter Umständen ebenfalls resultiert, dies kann aber bei entsprechender Auslegung der Verriegelungseinheit gleichwohl vollkommend ausreichend sein.

Die Erfindung umfasst daher sowohl Lösungen, bei welchen der Permanentmagnet den Ankerraum umgibt beziehungsweise unmittelbar an diesem anschließt, insbesondere in der Verriegelungseinheit im Wesentlichen ortsfest ist, wie auch Lösungen, bei welchen der Permanentmagnet bezüglich der Spule beweglich ist, da dieser auf der Ankerstange und/oder dem Anker angeordnet ist.

Der Begriff Permanentmagnet umfasst die verschiedenste geometrische Gestaltungen als Einzelmagnet oder die räumliche Anordnung einer Mehrzahl von Magneten, zum Beispiel Segmentmagneten, um eine Kreis- oder Ringgestaltung zu realisieren. Bei einer Anordnung des Permanentmagneten um den Ankerraum herum ist es insbesondere günstig, dass der Permanentmagnet radial magnetisiert ist. Es ist aber auch erfindungsgemäß vorgesehen, dass der Permanentmagnet axial magnetisiert ist, insbesondere wenn sich dieser auf dem Anker beziehungsweise auf der Ankerstange befindet.

Für die Anordnung des Permanentmagneten in der Verriegelungseinheit beziehungsweise in der den Elektromagneten umfassenden Verriegelungseinheit gibt es eine Mehrzahl von erfindungsgemäßen Varianten. Zunächst ist es möglich, den Permanentmagneten in geeigneter Weise in dem Gehäuse des Elektromagneten einzubetten. In einer nächsten Variante ist es günstig, dass der Permanentmagnet beziehungsweise die Anordnung von Segmentmagneten, die den Permanentmagneten bilden, zum Spulenkörper der Spule zu realisieren. Zum Beispiel ist an dem Spulenkörper eine entsprechende Aufnahmetasche für die Segmentmagnete vorgesehen oder aber der Spulenkörper ist um dem Permanentmagneten herum aufgespritzt und trägt so den Permanentmagneten. Man erkennt unschwer, dass die Erfindung hier sehr variabel auf den jeweiligen Anwendungsfall anpassbar ist. Die Integration des Permanentmagneten auf dem Spulenkörper der Spule erlaubt auch eine Vorfertigung dieser Baugruppe in einem integrativen Schritt, ein solcher Ansatz wird insbesondere dadurch erleichtert, dass beide Elemente, Permanentmagnet und Spule, den gleichen magnetischen Kreis nutzen.

Darüberhinaus umfasst die Erfindung aber auch eine Lösung bei welcher eine von dem Spulenkörper der Spule getrennte, insbesondere ringartige Halterung für den Permanentmagneten beziehungsweise die Anordnung von einzelnen Segmentmagneten des Permanentmagneten vorgesehen ist. So lässt sich in einfacher Weise auch ein Baukastensystem für die Dimensionierung der magnetisch wirksamen Elementen des magnetischen Kreises des Elektromagneten aufbauen.

Die erfindungsgemäße Verriegelungseinheit besitzt eine Betätigungselementverriegelung, die gemäß der Erfindung ausgesprochen variabel realisierbar ist. Als Betätigungselementverriegelung sind zum Beispiel radial verschiebbare Kugeln vorgesehen, die in entsprechenden Ringnuten eingreifen und so die Bewegungsmöglichkeit des Betätigungselementes reduzieren oder ausschließen.

Ähnliches kann auch mit entsprechend wirkenden Hebeln oder Bolzen erfolgen. In einer bevorzugten Variante der Erfindung ist desweiteren vorgesehen, dass die Betätigungselementverriegelung gebildet ist von mindestens einer Rastklinke, die eine Steuernase oder eine Raste aufweist, wobei die Steuernase mit einem Steuervorsprung der Ankerstange zusammenwirkt und die Rastnase gegebenenfalls mit einem Bewegungsspiel das Betätigungselement festhält.

Die Erfindung umfasst sowohl eine Verriegelungseinheit, wie insbesondere auch eine Getriebeverriegelungseinheit, bei welchen die Getriebeverriegelungseinheit mit dem Getriebe in Rückverbindung steht. Diese Rückverbindung wird im Bedienungselement hergestellt, wie ausgeführt, kann das Bedienungselement zum Beispiel Teil eines durch den hydraulischen Druck des Getriebes bewegbaren Kolben sein.

In der Zeichnung ist die Erfindung insbesondere in einem Ausführungsbeispiel schematisch dargestellt. Es zeigen:
Fig. 1a: : die erfindungsgemäße Verriegelungseinheit in einer Ansicht in einer geöffneten Stellung;
Fig. 1b: : die erfindungsgemäße Verriegelungseinheit in der Ansicht in der festhaltenden Stellung;
Fig. 2a, 2b, 2c: : in verschiedenen, teilweise dreidimensionalen Ansichten (Fig. 2a, 2c) einen Spulenkörper als Detail der Erfindung.

In den Figuren sind gleiche oder einander entsprechende Elemente jeweils mit den gleichen Bezugszeichen bezeichnet und werden daher, sofern nicht zweckmäßig, nicht erneut beschrieben.

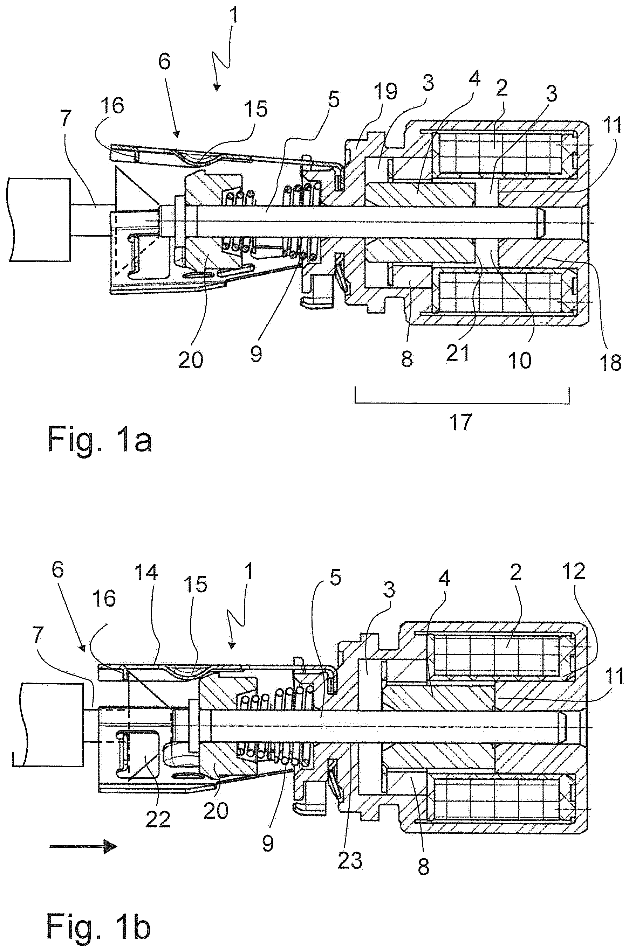

Die erfindungsgemäße Verriegelungseinheit 1 ist in Fig. 1a, 1b in zwei verschiedenen Stellungen gezeigt. Im rechten Bereich ist in der Verriegelungseinheit 1 ein typischer Elektromagnet 17 angeordnet. Dieser besteht aus einer Spule 2, die einen von elektrischem Strom durchfließbaren Draht in einer Vielzahl von Wicklungen trägt. Die Spule 2 umgibt einen Ankerraum 3, wobei sich der Ankerraum 3 in axialer Richtung der Spule 2 gesehen, auch noch über die Spule 2 nach links hinaus weiter erstreckt. Nach rechts abgeschlossen ist der Elektromagnet 17 durch ein Polstück 18, welches ein Stück weit in die Spule 2 hineinsteht. Der Ankerraum 3 grenzt an die Polfläche 11 des Polstückes 18.

In dem Ankerraum 3 ist ein Anker 4 axial (bezogen auf die Längsachse der Spule 2) beweglich gelagert. Der Anker 4 ist verbunden mit der Ankerstange 5, die einerseits für Führungszwecke in eine Bohrung des Polstückes 18 einsteht, und auf der anderen Seite des Ankers 4 aus dem Ankerraum 3 heraussteht und auf das Betätigungselement 7 wirkt oder von diesem beieinflusst wird. Das den Elektromagneten 17 umgebende Gehäuse 19 besitzt dabei eine öffnung, durch welche die Ankerstange 5 geführt ist. Außerhalb des Elektromagneten 17 ist in dem hier gezeigten Ausführungsbeispiel in der Ankerstange 5 ein Steuervorsprung 20 vorgesehen, der konusartig oder flanschartig ausgebildet ist, also einen deutlich größeren Durchmesser aufweist, als der Durchmesser der Ankerstange 5. Der Steuervorsprung 20 ist auf der Ankerstange 5 fest angeordnet und bildet gleichzeitig auch ein Abstützlager für eine zwischen dem Steuervorsprung 20 und dem Gehäuse 19, auf der Ankerstange 5 aufgeschobenen Rückstellfeder 9. Bei einer Bewegung des Ankers 4 nach rechts zur Überbrückung des Luftspaltes 10 zwischen der Ankerendfläche 21 und der Polfläche 11 wird die Rückstellfeder 9 komprimiert. Diese Situation ist in Fig. 1b beschrieben, erfindungsgemäß wird diese als erste Stellung beschriebene Anordnung von einem Permanentmagneten 8 insbesondere stromlos gehalten. Erreicht wird diese erste Stellung dadurch, dass z.B. das (externe) Betätigungselement 7 z.B. eine Verbindung mit einem Getriebe eines Fahrzeuges oder der Steuerung eines Fahrzeuges herstellt und derart nach rechts versetzt wird, dass auch die Ankerstange nach rechts verschoben ist.

Im magnetischen Kreis des Elektromagneten ist ein Permanentmagnet 8 vorgesehen. Dieser Permanentmagnet 8 bildet eine Haltekraft über dem Luftspalt 10 aus, und hält so zuverlässig diese erste Stellung der Ankerstange 5.

In dem hier gezeigten Ausführungsbeispiel sitzt der Permanentmagnet 8 zwischen der Spule 2 und der Betätigungselementverriegelung 6 bzw. der Öffnung 21 in dem Gehäuse 19, durch welches die Ankerstange 5 herausgeführt ist.

Die Betätigungselementverriegelung 6 ist gebildet aus ein oder mehreren Rastklinken 14, die hier eine im wesentlichen radiale Bewegung, bezogen auf die Längsachse der Ankerstange 5 bzw. der Achse der Spule 2 ausüben. Dabei besitzt die Rastklinke 14 auf ihrer dem Elektromagneten 17 abgewandten Seite eine nach innen vorstehende Raste 16, die in einen entsprechenden Vorsprung 22 des Betätigungselementes 7 verrastend zusammenwirkt. Aufgrund der federnden Wirkung der Rastklinke 14 hintergreift die Raste 16 den Vorsprung 22 und legt somit das Betätigungselement 7 fest, das heißt die Raste 16 verriegelt es. In diesem Fall kommuniziert also die erste Stellung der Ankerstange 5 mit der festgehaltenen Lage des Betätigungselementes 7 durch die Betätigungselementverriegelung 6.

Ein wesentlicher Vorzug der Erfindung ist, dass diese erste Lage durch den Permanentmagneten 8 ohne Einsatz von Energie realisiert wird.

Nun wird die Drahtwicklung der Spule 2, zumindest mit einem Stromimpuls oder einem Stromfluß beaufschlagt, wodurch sich in der Spule 2 ein Magnetfeld entwickelt, welches insbesondere so orientiert ist, dass es dem Magnetfeld des Permangentmagneten 8 entgegengerichtet ist. Dabei wird die Stärke so gewählt, dass die Haltekraft des Permanentmagneten 8, welche den Anker 4 auf die Polfläche 11 presst, überwunden wird.

Es resultiert dann, dass die in der Rückstellfeder 9 gespeicherte Federenergie, ein Versetzen der Ankerstange 5 nach links bewirkt, wie in der Figur 1a gezeigt ist.

Dabei wird auch der Steuervorsprung 20 nach links versetzt und seine Steuerflanken wirken zusammen mit der Steuernase 15 der Rastklinke 14. So spreizt der vorsprung 22 die Rastklinke 14 nach außen, die Raste 16 gibt den Vorsprung 22 des Betätigungselementes 7 frei.

Das Betätigungselement 7 kann dann entsprechend zurückweichen und andere Schaltzugänge einnehmen, z.B. die Parkposition festlegen oder ähnliches.

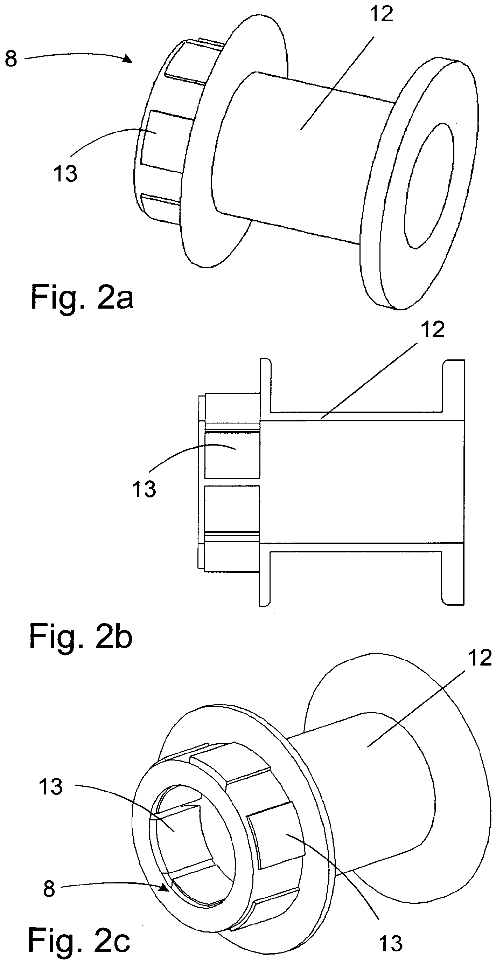

In der Fig. 2a, 2b, 2c ist der Spulenkörper, der die Spule 2 bildet, in einer erfindungsgemäßen Variante gezeigt. Der Permanentmagnet ist in dem hier gezeigten Ausführungsbeispiel durch eine Vielzahl von Segmentmagneten 13 realisiert, die auf einem ringartigen Fortsatz an dem haspelartigen Spulenkörper 12 ringförmig angeordnet oder eingeformt sind. Die Anordnung einer Vielzahl von Segmentmagneten erleichtert die Realisierung des erfindungsgemäßen Permanentmagneten.

## Patentansprüche

1. Verriegelungseinheit, insbesondere Getriebeverriegelungseinheit, bestehend aus einer Spule (2), welche zumindest teilweise einen Ankerraum (3) umgibt, wobei die Spule (2) einen von elektrischem Strom durchfließbaren Draht aufweist, sowie eine aus dem Ankerraum (3) herausstehende, einen Anker (4) tragenden, gegenüber der Spule (2) beweglichen Ankerstange (5) sowie bestehend aus einer mit der Ankerstange (5) zusammenwirkenden Betätigungselementverriegelung (6), die in Abhängigkeit der Stellung der Ankerstange (5) in einer ersten oder zweiten Stellung ein Betätigungselement (7) festhält oder freigibt und die Ankerstange (5) beziehungsweise der Anker (4) in einer ersten Stellung von einem Permanentmagneten (8) insbesondere stromlos gehalten ist und ein Stromfluss durch den Draht der Spule die Haltekraft des Permanentmagneten (8) kompensiert und die Ankerstange (5) in die zweite Stellung gelangt, wobei die Spule (2) einen Spulenkörper (12) aufweist und der Spulenkörper (12) den Permanentmagneten (8) aufnimmt oder trägt, **dadurch gekennzeichnet, dass** der Permanentmagnet (8) als ringartige Anordnung von einzelnen Segmentmagneten (13) ausgebildet ist, die an einem ringartigen Fortsatz an dem haspelartigen Spulenkörper (12) ringförmig angeordnet oder angeformt sind.

2. Verriegelungseinheit, insbesondere Getriebeverriegelungseinheit, bestehend aus einer Spule (2), welche zumindest teilweise einen Ankerraum (3) umgibt, wobei die Spule (2) einen von elektrischem Strom durchfließbaren Draht aufweist, sowie eine aus dem Ankerraum (3) herausstehende, einen Anker (4) tragenden, gegenüber der Spule (2) beweglichen Ankerstange (5) sowie bestehend aus einer mit der Ankerstange (5) zusammenwirkenden Betätigungselementverriegelung (6), die in Abhängigkeit der Stellung der Ankerstange (5) in einer ersten oder zweiten Stellung ein Betätigungselement (7) festhält oder freigibt und die Ankerstange (5) beziehungsweise der Anker (4) in einer ersten Stellung von einem Permanentmagneten (8) insbesondere stromlos gehalten ist und ein Stromfluss durch den Draht der Spule (2) die Haltekraft des Permanentmagneten (8) kompensiert und die Ankerstange (5) in die zweite Stellung gelangt, wobei die Spule (2) einen Spulenkörper (12) aufweist, **dadurch gekennzeichnet, dass** eine von dem Spulenkörper (12) der Spule (2) getrennte, ringartige Halterung für den Permanentmagneten (8) beziehungsweise für die Anordnung von einzelnen Segmentmagneten (13) des Permanentmagneten (8) vorgesehen ist und der Permanentmagnet (8) in der Verriegelungseinheit im Wesentlichen ortsfest ist.

3. Verriegelungseinheit nach Anspruch 1 oder 2, **dadurch gekennzeichnet, dass** das Betätigungselement (7) derart auf die Ankerstange (5) wirkt, dass die Ankerstange (5) insbesondere gegen die Kraft einer Rückstellfeder (9) in die erste Stellung gelangt.

4. Verriegelungseinheit nach einem der vorhergehenden Ansprüche, **dadurch gekennzeichnet, dass** in der ersten Stellung ein in der zweiten Stellung geöffneter Luftspalt (10) zwischen dem Anker (4) und einer Polfläche (11) geschlossen ist.

5. Verriegelungseinheit nach einem der vorhergehenden Ansprüche, **dadurch gekennzeichnet, dass** der Permanentmagnet (8) im gleichen magnetischen Kreis angeordnet ist wie die Spule (2).

6. Verriegelungseinheit nach einem der vorhergehenden Ansprüche, **dadurch gekennzeichnet, dass** der Permanentmagnet (8) den Ankerraum (3) umgibt beziehungsweise unmittelbar an diesem anschließt.

7. Verriegelungseinheit nach einem der vorhergehenden Ansprüche, **dadurch gekennzeichnet, dass** der Permanentmagnet (8) radial oder axial magnetisiert ist.

8. Verriegelungseinheit nach einem der vorhergehenden Ansprüche, **dadurch gekennzeichnet, dass** die Betätigungselementverriegelung (6) gebildet ist von mindestens einer Rastklinke (14), die eine Steuernase (15) und eine Raste (16) aufweist, und die Steuernase (15) mit einem Steuervorsprung (20) der Ankerstange (5) zusammenwirkt und die Raste (16), gegebenenfalls mit einem Bewegungsspiel, das Betätigungselement (7) festhält.

9. Verriegelungseinheit nach einem der vorhergehenden Ansprüche, **dadurch gekennzeichnet, dass** das Betätigungselement (7) mit dem Getriebe beziehungsweise der Getriebesteuerung in Wirkverbindung steht.

## Claims

1. Locking unit, in particular transmission locking unit, consisting of a coil (2) encircling at least partly an armature space (3), wherein the coil (2) has a wire that is energized by electric current, as well as an armature rod (5) protruding from the armature space (3), carrying an armature (4), and movable relatively to the coil (2), as well as consisting of an operating element locking device (6) interacting with the armature rod (5) and holding or releasing in a first or second position an operating element (7) depending on the position of the armature rod (5), and the armature rod (5) or the armature (4) is held in a first position by a permanent magnet (8), in particular currentless, and a current flow through the wire of the coil compensates the holding force of the permanent magnet (8), and the armature rod (5) reaches the second position, wherein the coil (2) has a coil former (12), and the coil former (12) receives or carries the permanent magnet (8), **characterized in that** the permanent magnet (8) is configured as annular arrangement of separate segment magnets (13) annularly arranged at or formed to an annular extension at the reellike coil former (12).

2. Locking unit, in particular transmission locking unit, consisting of a coil (2) encircling at least partly an armature space (3), wherein the coil (2) has a wire that is energized by electric current, as well as an armature rod (5) protruding from the armature space (3), carrying an armature (4), and movable relatively to the coil (2), as well as consisting of an operating element locking device (6) interacting with the armature rod (5), the operating element locking device (6) holding or releasing an operating element (7) depending on the position of the armature rod (5) in a first or second position, and the armature rod (5) or the armature (4) is held in particular currentless in a first position by a permanent magnet (8), and a current flow through the wire of the coil (2) compensates the holding force of the permanent magnet (8), and the armature rod (5) reaches the second position, wherein the coil (2) has a coil former (12), **characterized in that** an annular holding device that is separated from the coil former (12) of the coil (2) is provided for the permanent magnet (8) or for the arrangement of separate segment magnets (13) of the permanent magnet (8), and the permanent magnet (8) is essentially stationary in the locking unit.

3. Locking unit according to either claim 1 or 2, **characterized in that** the operating element (7) acts on the armature rod (5) such that the armature rod (5) reaches the first position in particular against the power of a pull-back spring (9).

4. Locking unit according to one of the preceding claims, **characterized in that** in the first position an air gap (10) between the armature (4) and a pole face (11), that is open in the second position, is closed.

5. Locking unit according to one of the preceding claims, **characterized in that** the permanent magnet (8) is arranged in the same magnetic circuit as the coil (2).

6. Locking unit according to one of the preceding claims, **characterized in that** the permanent magnet (8) surrounds the armature space (3) or joins it immediately.

7. Locking unit according to one of the preceding claims, **characterized in that** the permanent magnet (8) is magnetized either radially or axially.

8. Locking unit according to one of the preceding claims, **characterized in that** the operating element locking device (6) is formed by at least one latching pawl (14) having a guide nose (15) and a catch (16), and the guide nose (15) interacts with a guide projection (20) of the armature rod (5), and, if necessary with moving space, the catch (16) holds the operating element (7).

9. Locking unit according to one of the preceding claims, **characterized in that** the operating element (7) is in active connection with the transmission or the transmission control.

## Revendications

1. Dispositif de verrouillage, en particulier unité de verrouillage d'un engrenage, consistant en une bobine (2) entourant au moins temporairement un espace d'induit (3) formée d'un fil pouvant être parcouru par un courant électrique, en une tige d'induit (5) sortant de l'espace d'induit (3), portant un induit (4) et mobile par rapport à la bobine (2) ainsi qu'en un verrouillage de dispositif d'actionnement (6) interagissant avec la tige d'induit (5) de façon à ce qu'il immobilise ou libère un élément d'actionnement (7) au niveau d'une première ou d'une deuxième position en fonction de la position de la tige d'induit (5) et à ce que la tige d'induit (5) ou l'induit (4) est maintenu par un aimant permanent (8) en une première position et ceci, en particulier sans un courant électrique et à ce qu'un courant électrique à travers le fil de la bobine compense la force d'immobilisation de l'aimant permanent (8) et translate la tige d'induit (5) vers une deuxième position et ceci, avec une bobine (2) comportant un corps de bobine (12) recevant ou supportant l'aimant permanent 8, **caractérisé en ce que** l'aimant permanent (8) est configuré en forme d'anneau avec des segments d'aimant(13) individuels situés ou ajustés à une forme d'anneau au niveau d'une prolongation en forme d'anneau du corps de bobine (12) en forme d'un bobinoir.

2. Dispositif de verrouillage, en particulier unité de verrouillage d'un engrenage, consistant en une bobine (2) entourant au moins temporairement un espace d'induit (3) formée d' un fil pouvant être parcouru par un courant électrique, en une tige d'induit (5) sortant de l'espace d'induit (3), portant un induit (4) et mobile par rapport à la bobine (2) ainsi qu'en un verrouillage de dispositif d'actionnement (6) interagissant avec la tige d'induit (5) de façon à ce qu'il immobilise ou libère un élément d'actionnement (7) au niveau d'une première ou d'une deuxième position en fonction de la position de la tige d'induit (5) et à ce que la tige d'induit (5) ou l'induit (4) est maintenu par un aimant permanent (8) en une première position et ceci, en particulier sans un courant électrique et à ce qu'un courant électrique à travers le fil de la bobine compense la force d'immobilisation de l'aimant permanent (8) et translate la tige d'induit (5) vers une deuxième position et ceci, avec une bobine (2) comportant un corps de bobine (12), **caractérisé en ce qu'**un support en forme d'anneau, séparé du corps de bobine (12) de la bobine (2) est prévu et destiné à l'aimant permanent (8) ou à un assemblage de segments d'aimant individuels (13) de l'aimant permanent (8) et **en ce que** l'aimant permanent (8) est placé à une position essentiellement fixe à l'intérieur de l'unité de verrouillage.

3. Dispositif de verrouillage selon la revendication 1 ou 2, **caractérisé en ce que** le dispositif d'actionnement (7) agit sur la tige d'induit (5) de façon à ce que la tige d'induit (5) est déplacée jusque dans la première position et ceci, en particulier contre la force d'un ressort de rappel (9).

4. Dispositif de verrouillage selon une des revendications précédentes, **caractérisé en ce qu'**une fente d'air (10) située entre l'induit (4) et la surface de pôle (11), ouverte dans la deuxième position, est fermée dans la première position.

5. Dispositif de verrouillage selon une des revendications précédentes, **caractérisé en ce que** l'aimant permanent (8) est situé dans la même boucle magnétique que la bobine (2).

6. Dispositif de verrouillage selon une des revendications précédentes, **caractérisé en ce que** l'aimant permanent(8) entoure l'espace d'induit (3) ou le prolonge directement.

7. Dispositif de verrouillage selon une des revendications précédentes, **caractérisé en ce que** l'aimant permanent (8) est magnétisé selon une orientation radiale ou axiale.

8. Dispositif de verrouillage selon une des revendications précédentes, **caractérisé en ce que** le verrouillage de dispositif d'actionnement (6) est formé par au moins un cliquet d'arrêt (14) avec un bec de commande (15) et un loquet (16) de façon à ce que le bec de commande (15) interagit avec une protubérance de commande (20) de la tige d'induit (5) et **en ce que** le loquet (16) immobilise l'élément d'actionnement (7) le cas échéant avec un léger jet de mouvement.

9. Dispositif de verrouillage selon une des revendications précédentes, **caractérisé en ce que** l'élément d'actionnement (7) est en interaction directe avec l'engrenage ou le système de commande de l'engrenage.
